# EUROPÄISCHE PATENTSCHRIFT

(11) **EP 1 722 123 B1**
(45) Veröffentlichungstag und Bekanntmachung des Hinweises auf die Patenterteilung: **15.04.2009**
(21) Anmeldenummer: 06009287.1
(22) Anmeldetag: 05.05.2006
(51) Int. Cl.: F16F 1/16, F16F 15/06, B64G 1/22, E05D 1/02

(54) **Mechanischer Rotationsantrieb**
Mechanical rotary drive
Entraînement en rotation mécanique

(30) Priorität: 10.05.2005 DE 102005021459
(43) Veröffentlichungstag der Anmeldung: 15.11.2006
(73) Patentinhaber: Astrium GmbH, 28199 Bremen (DE)
(72) Erfinder: Sperger, Franz, 83059 Kolbermoor (DE); Stich, Walter, 83714 Miesbach (DE); Stielner, Leonhard, 83629 Weyarn (DE); Wagner, Adalbert, 83739 Radthal-Wörnsmühl (DE)
(74) Vertreter: Hummel, Adam

(56) Entgegenhaltungen:
- DE-C1- 4 403 465
- FR-A- 964 473
- GB-A- 963 860
- US-A- 4 479 356
- US-A1- 2002 000 496
- US-B1- 6 298 662

## Beschreibung

### TECHNISCHES GEBIET

Die vorliegende Erfindung betrifft einen mechanischen Rotationsantrieb mit einem stabartigen Torsionselement.

### STAND DER TECHNIK

Mechanische Rotationsantriebe sind vielfältig bekannt. Insbesondere werden derartige Antriebe in der Raumfahrttechnik eingesetzt, um beispielsweise an Satelliten einmalige Betätigungen von externen Strukturen, beispielsweise das Ausfahren von Antennen oder Solarpaneelen zu bewirken. Derartige Rotationsantriebe besitzen den Vorteil, dass sie auf der Erde vor Beginn einer Weltraummission mit einer mechanischen Energie vorbelastet werden können, die dann im Weltraum zur Durchführung der gewünschten Betätigung abgegeben wird. Diese Betätigung ist daher nicht auf die im Weltraum nur sehr begrenzt verfügbare elektrische Energie angewiesen.

Allerdings fordern derartige Antriebslösungen bei Satelliten oder anderen Raumfahrzeugen eine hohe Zuverlässigkeit und eine hohe Positionsgenauigkeit der ausgefahrenen Antenne oder des ausgefahrenen Solarpaneels nach dem Ausfahren. Herkömmliche mechanische Systeme sind, um diese Ziel zu erreichen, komplex aufgebaut, schwer und somit teuer. Ein wesentliches Problem bei herkömmlichen mechanischen Systemen ist das Lagerspiel, das in der Regel eine exakte Positionierung einer auszufahrenden externen Struktur nicht gewährleistet. Hierzu bedarf es häufig gesonderter mechanischer Mittel, wie beispielsweise Verrastungseinrichtungen, deren Vorsehen aber wiederum das Gewicht und damit die Kosten erhöht und auch die Komplexität der Gesamtanordnung vergrößert, was sich regelmäßig nachteilig auf die Zuverlässigkeit des Gesamtsystems auswirkt.

Die DE 37 40 756 A1 betrifft eine drehelastische Hohlwelle zur Drehmomentübertragung, die zur Drehschwingungsdämpfung mit einem außen- oder innenliegenden drehsteifen Rohrkörper in koaxialer Anordnung unter Auftreten von Reibung kombiniert ist. Die Hohlwelle ist dabei aus Faserverbundwerkstoff hergestellt und unmittelbar mit Anschlussteilen zur Drehmomenteinleitung verbunden und übernimmt ausschließlich die Drehmomentübertragung, während der drehsteife Rohrkörper Reibungskräfte gegenüber der tordierten Welle erzeugt. Die Reibung kann durch Oberflächenkontakt oder durch innere Reibung in flüssigen oder festen Dämpfungsmedien erzeugt werden.

Die DE 696 08 930 T2 betrifft Kommunikationssatelliten, Raumstationen und dergleichen, die Solarpaneeleinheiten als hauptsächliche Energiequelle benutzen. Die Schrift beschreibt eine hybride Solarpaneeleinheit, die eine Kombination von starren Solarpaneelen mit halbstarren Solarpaneelen oder mit flexiblen Solarpaneelen verwendet.

Die DE 696 04 165 T2 betrifft eine Vorrichtung zum Ausrichten eines Solarpaneels auf einem Raumfahrzeug. Die Vorrichtung umfasst einen temperatursensitiven Antriebsmechanismus, welcher geeignet ist das Paneel relativ zum Körper des Raumfahrzeugs zu versetzen und zwar automatisch als eine Funktion der Einfallsrichtung der Sonnenstrahlung auf das Raumfahrzeug.

Die DE 689 02 110 T2 betrifft ein reibungsfreies selbstangetriebenes Gelenk und eine gelenkige Einheit, beispielsweise ein Satellitensolarpaneel, das mit solchen Gelenken versehen ist. Das Gelenk umfasst zwei Streben, welche geeignet sind durch zwei zylindrische Flächen aufeinander zu rollen.

### DARSTELLUNG DER ERFINDUNG

Aufgabe der vorliegenden Erfindung ist es daher, einen mechanischen Rotationsantrieb anzugeben, der bei geringem Gewicht und niedriger Komplexität ein geringes Lagerspiel aufweist und somit eine hohe Positionierungsgenauigkeit erzielen kann und der bei hoher Zuverlässigkeit kostengünstig herstellbar ist.

Diese Aufgabe wird durch den mechanischen Rotationsantrieb gemäß Patentanspruch 1 gelöst.

Erfindungsgemäß ist ein mechanischer Rotationsantrieb mit einem stabartigen Torsionselement vorgesehen,
- wobei das Torsionselement mit einem ersten Ende in einer Lagereinrichtung eingespannt ist,
- wobei das Torsionselement mit einem zweiten, freien Ende gegenüber dem eingespannten Ende um die eine Drehachse bildende Längsachse des Torsionselements zwischen einer entspannten Stellung und einer gespannten Stellung verdrehbar ist,
- wobei die Länge des Torsionselements gegenüber der entspannten Stellung verkürzt ist, wenn das Torsionselement in seine gespannte Stellung gebracht ist,
- wobei im Bereich des freien Endes eine Einrichtung zum Übertragen eines Drehmoments in das Torsionselement oder aus dem Torsionselement vorgesehen ist,
- wobei eine Dämpfungsvorrichtung in Axialrichtung des Torsionselements in einem festen Abstand zur Lagereinrichtung und dem freien Ende des Torsionselements benachbart angeordnet ist, und
- wobei im Bereich des freien Endes des Torsionselements ein Dämpfungsteil am Torsionselement vorgesehen ist, das in der entspannten Stellung in Reibeingriff mit der Dämpfungsvorrichtung steht und das in der gespannten Stellung nicht in Eingriff mit der Dämpfungsvorrichtung steht.

Das erfindungsgemäße Vorsehen einer Dämpfungsvorrichtung in Axialrichtung des Torsionselements in einem festen Abstand zur Lagereinrichtung und dem freien Ende des Torsionselements benachbart und das Vorsehen des Dämpfungsteils im Bereich des freien Endes des Torsionselements derart, dass das Dämpfungsteil in der entspannten Stellung des Torsionselements in Reibeingriff mit der Dämpfungsvorrichtung steht und in der entspannten Stellung des Torsionselements nicht in Eingriff mit der Dämpfungsvorrichtung steht, nutzt auf geschickte, neuartige Weise den Effekt aus, dass sich das Torsionselement beim Entspannen in Axialrichtung geringfügig verlängert, so dass die Dämpfungsvorrichtung und das Dämpfungsteil bei dieser Verlängerung des Torsionselements miteinander in Eingriff geraten können. Die Torsionsbewegung des Torsionselements aus seiner gespannten Stellung in die entspannte Stellung wird somit am Ende oder kurz vor dem Ende des vorgesehenen Torsionswegs vom Reibeingriff zwischen Dämpfungsteil und Dämpfungsvorrichtung abgebremst, so dass es seine genaue vorbestimmte Zielposition erreichen kann. Durch diesen Reibeingriff wird auch verhindert, dass das Torsionselement beim Abbremsen eine Torsionsschwingung um die Zielposition herum ausführt, da der Reibeingriff eine derartige Schwingung bereits im Ansatz dämpft.

Besonders vorteilhaft ist es, wenn das Torsionselement einen zentralen Stützstab aufweist, der eine Verbiegung des Torsionselements entlang dessen Längsachse unterbindet und somit die statische Stabilität des Torsionselements erhöht.

Weiter vorteilhaft ist es, wenn das Torsionselement ringförmig um den parallel zur Längsachse angeordnete elastische Biegestäbe aufweist, die in der Lagereinrichtung und in der Einrichtung zum Übertragen eines Drehmoments ringförmig eingespannt sind. Diese ringförmige Anordnung von Biegestäben ermöglicht es, ein besonders leichtes Torsionselement zu schaffen, das bei kompaktem Aufbau große Verdrehwinkel und eine wirksame, deutliche Längenänderung über den Torsionsweg ermöglicht. Besonders vorteilhaft ist dabei, wenn die Biegestäbe aus einem Kohlefasermaterial bestehen, wodurch das Gewicht weiter reduziert wird.

Vorzugsweise sind die ringförmig angeordneten Biegestäbe von einem Mantelrohr umgeben, wodurch ein Schutz für die Biegestäbe erzielt wird.

Das freie Ende des Torsionselements ist vorzugsweise relativ zum zentralen Stützstab und/oder zum Mantelrohr frei verdrehbar.

Eine besonders vorteilhafte Ausgestaltung des erfindungsgemäßen mechanischen Rotationsantriebs zeichnet sich dadurch aus, dass das Dämpfungsteil zumindest eine Reibfläche aufweist, die um die Drehachse drehbar ist und dass die Dämpfungsvorrichtung zumindest eine Reibfläche aufweist, die zumindest abschnittsweise um die Drehachse herum angeordnet ist. Diese konzentrische Anordnung von Dämpfungsteil und Dämpfungsvorrichtung um die Drehachse herum ermöglicht es, die Dämpfungskraft über eine vorgebbare Wegstrecke der Rotationsbewegung langsam und kontinuierlich aufzubauen und so eine besonders wirksame Dämpfung und Abbremsung des Torsionselements zu erzielen, da sich durch die Längenänderung des Torsionselements die Reibkraft zwischen Dämpfungsteil und Dämpfungsvorrichtung erhöht.

Besonders vorteilhaft ist dabei, wenn die Reibflächen als Radialflächen bezüglich der Drehachse ausgebildet sind.

Noch wirksamer ist es, wenn die Reibflächen als konische Flächen um die Drehachse ausgebildet sind, wobei sie kegelförmig-konisch oder ballig-konisch ausgebildet sein können.

Vorzugsweise sind die Reibflächen ringförmig oder teilringförmig ausgebildet.

Eine besonders bevorzugte Verwendung eines mechanischen Rotationsantriebs gemäß der Erfindung ist die eines Antriebselements zum Entfalten von externen Strukturen an Raumfahrzeugen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine Prinzipskizze eines mechanischen Rotationsantriebs im Längsschnitt;
- Fig. 2: eine teilweise geschnittene perspektivische Ansicht einer bevorzugten Ausgestaltung eines erfindungsgemäßen mechanischen Rotationsantriebs;
- Fig. 3: einen Vertikalschnitt durch das Dämpfungssystem der Ausführung nach Fig. 2; und
- Fig. 4: eine Anwendung des erfindungsgemäßen mechanischen Rotationsantriebs an einer Antennenstruktur eines Raumfahrzeugs.

### DARSTELLUNG VON BEVORZUGTEN AUSFÜHRUNGSBEISPIELEN

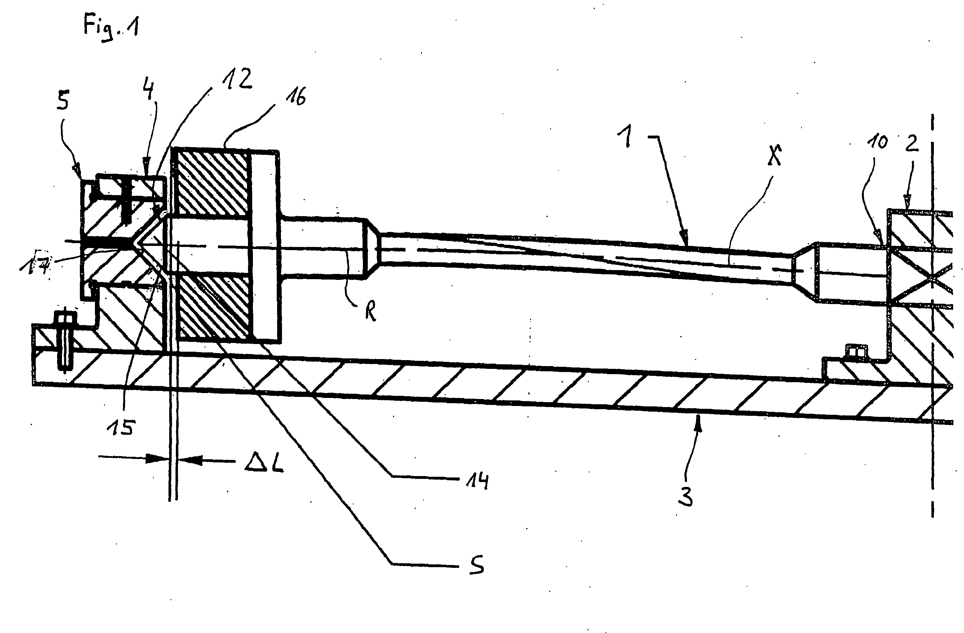

In Fig. 1 ist ein erfindungsgemäßer mechanischer Rotationsantrieb schematisch dargestellt. Ein stabartiges Torsionselement 1 ist mit einem ersten Ende 10 in einer Lagereinrichtung 2 fest eingespannt. Die Lagereinrichtung 2 ist auf einer Basis 3 fest montiert. Die Basis 3 kann beispielsweise ein äußeres Strukturelement eines Raumfahrzeugs sein, an welchem eine externe Struktur des Raumfahrzeugs, beispielsweise eine Antenne oder ein Solarpaneel, angebracht ist.

Weiterhin ist an der Basis 3 eine Gegenlagereinrichtung 4 fest angebracht, die eine Dämpfungsvorrichtung 5 aufweist. Der Abstand in Axialrichtung des Torsionselements 1 zwischen der Lagereinrichtung 2 und der Dämpfungsvorrichtung 5 ist durch die relative Anordnung der Lagereinrichtung 2 und der Gegenlagereinrichtung 4 auf der Basis 3 fest vorgegeben.

An seinem vom ersten Ende 10 abgewandten zweiten, freien Ende 12 ist das Torsionselement 1 mit einem zum Reibeingriff mit der Dämpfungsvorrichtung 5 ausgebildeten Dämpfungsteil 14 versehen. Des weiteren ist im Bereich des freien Endes 12 eine Einrichtung 16 zum Übertragen eines Drehmoments in das Torsionselement 1 oder aus dem Torsionselement 1 vorgesehen. Die Einrichtung 16 zum Übertragen eines Drehmoments kann beispielsweise ein sich bezüglich der Drehachse R radial erstreckender Hebel sein.

In Fig. 1 ist das Torsionselement 1 in seiner gegenüber dem Ruhezustand verdrehten und somit in Rotationsrichtung gespannten Stellung gezeigt. Durch diese Verdrehung gegenüber seinem Ruhezustand ist das Torsionselement 1 gegenüber seiner Länge im Ruhezustand um den Betrag ΔL verkürzt.

Während das Torsionselement 1 in seiner entspannten Ruhestellung mit der stirnseitig am Dämpfungsteil 14 ausgebildeten konischen Reibfläche 15 an einer passend dazu ausgebildeten konischen Gegenreibfläche 17 der Dämpfungsvorrichtung 5 anliegt, ist in der gespannten Stellung des Torsionselements 1 ein Spalt S zwischen den beiden konischen Reibflächen 15 und 17 ausgebildet, so dass die Reibflächen 15, 17 in der gespannten Stellung des Torsionselements 1 nicht miteinander in Eingriff stehen.

In dem in Fig. 1 gezeigten schematischen Beispiel ist die konische Reibfläche 15 am freien Ende 12 des Torsionselements 1 als in Richtung auf die Dämpfungsvorrichtung 5 vorstehende Kegelspitze ausgebildet, während die an der Dämpfungsvorrichtung 5 vorgesehene Gegenreibfläche 17 eine entsprechende kegelförmige Vertiefung in der Dämpfungsvorrichtung 5 bildet. Sowohl der Kegel der Reibfläche 15 als auch der Kegel der Gegenreibfläche 17 sind koaxial zur Rotationsachse R und damit zur Längsachse X des Torsionselements 1 angeordnet.

Obwohl das Torsionselement 1 in der schematischen Darstellung der Fig. 1 als Torsionsstab dargestellt ist, bedeutet dies nicht, dass das stabartige Torsionselement 1 unbedingt als Torsionsstab ausgebildet sein muss. Es kann ebensogut als Torsionsrohr oder als ringförmige Anordnung einer Mehrzahl von Biege- oder Torsionsstäben ausgebildet sein, wie im nachfolgenden Ausführungsbeispiel beschrieben wird.

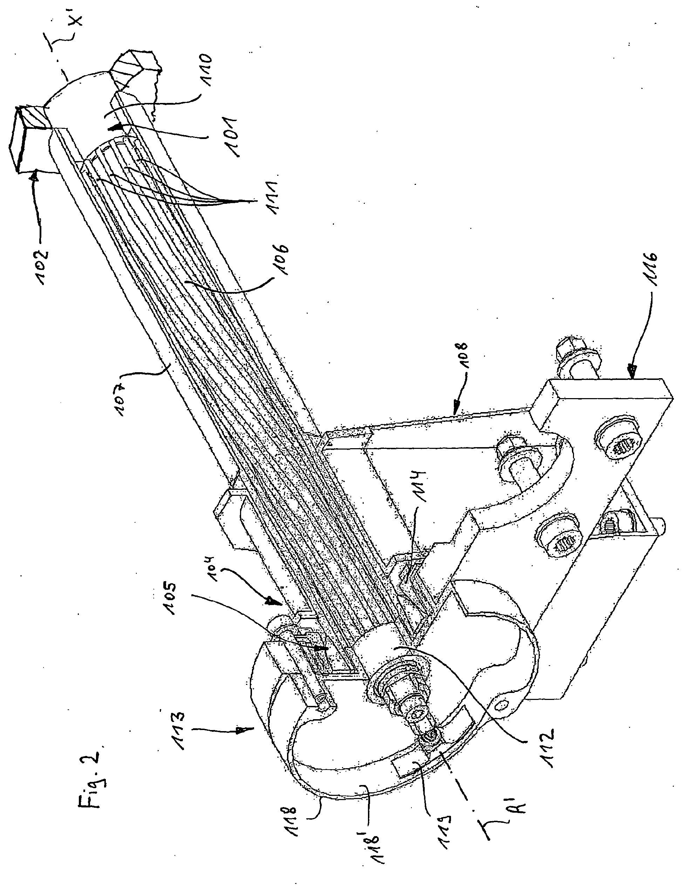

Fig. 2 zeigt eine praktische Ausführungsform einer besonders vorteilhaften Ausgestaltung des erfindungsgemäßen mechanischen Rotationsantriebs. Dargestellt sind in Fig. 2 das Torsionselement 101 und die Gegenlagereinrichtung 104. Die Lagereinrichtung 102, in der das Torsionselement 101 fest eingespannt ist, ist in Fig. 2 nur schematisch dargestellt.

Das Torsionselement 101 weist eine Mehrzahl von ringförmig parallel zur Längsachse X' angeordneten elastischen Biegestäben 111 auf, die in gleichem Umfangsabstand zueinander angeordnet sind und die mit einem ersten ringförmigen Rohrabschnitt 110 fest verbunden sind, der in der Lagereinrichtung 102 fest eingespannt ist und die am freien Ende des Torsionselement 101 mit einem zweiten ringförmigen Rohrabschnitt 112 fest verbunden sind. Das Torsionselement 101 umgibt einen zentralen Stützstab 106, der mit der zweiten Lagereinrichtung 102 ebenfalls fest verbunden ist. Der zentrale Stützstab 106 durchdringt das Torsionselement 101 in Richtung der Längsachse X'. Der zweite ringförmige Rohrabschnitt 112 des Torsionselements 101 ist relativ zum zentralen Stützstab 106 verdrehbar und kann auf diesem mittels eines herkömmlichen Gleitlagers oder Wälzlagers gelagert sein.

Das ringförmige oder rohrförmig ausgebildete Torsionselement 101 ist von einem Mantelrohr 107 umgeben, welches zumindest den Bereich der Biegestäbe 111 des Torsionselements 101 vor äußeren Einflüssen schützt. Im gezeigten Beispiel ist das Mantelrohr 107 ebenfalls fest mit der Lagereinrichtung 102 verbunden. Im Bereich des freien Endes des Torsionselements 101 ist das Mantelrohr 107 mit einer Lagerstütze 108 fest verbunden. Die Lagerstütze 108 wird vom Torsionselement 101 durchdrungen, so dass sich das freie Ende des Torsionselements 101 auf der von der Lagereinrichtung 102 abgewandten Seite der Lagerstütze 108 befindet.

An seinem freien Ende ist das Torsionselement 101 mit einer Brems- und Dämpfungseinrichtung 113 sowie mit einer Einrichtung 116 zum Übertragen eines Drehmoments in das Torsionselement 101 oder aus dem Torsionselement 101 versehen.

Die Brems- und Dämpfungseinrichtung 113 umfasst einerseits das Dämpfungsteil 114 und andererseits eine Bremstrommel 118, die an der freien Stirnseite des Torsionselements 101 vorgesehen ist und sich von der Lagereinrichtung 102 weg erstreckt. Die Bremstrommel 118 ist in einem Bereich, der etwa einer Drehung von 180° entspricht, mit einer koaxial zur Drehachse R' angeordneten Bremsfläche 118' versehen. Ein radial vom freien Ende des zentralen Stützstabs 106 hervorstehender Bremsschuh 119 steht in leichtem Reibeingriff mit der Bremsfläche 118' und dämpft beim Spannen oder Entspannen des Torsionselements 101 über den gesamten Torsionsbereich möglicherweise entstehende Rotationsschwingungen auch dann, wenn das Dämpfungsteil 114 am freien Ende des Torsionselements 101 und die Dämpfungsvorrichtung 105 der Gegenlagereinrichtung 104 nicht miteinander in Eingriff stehen.

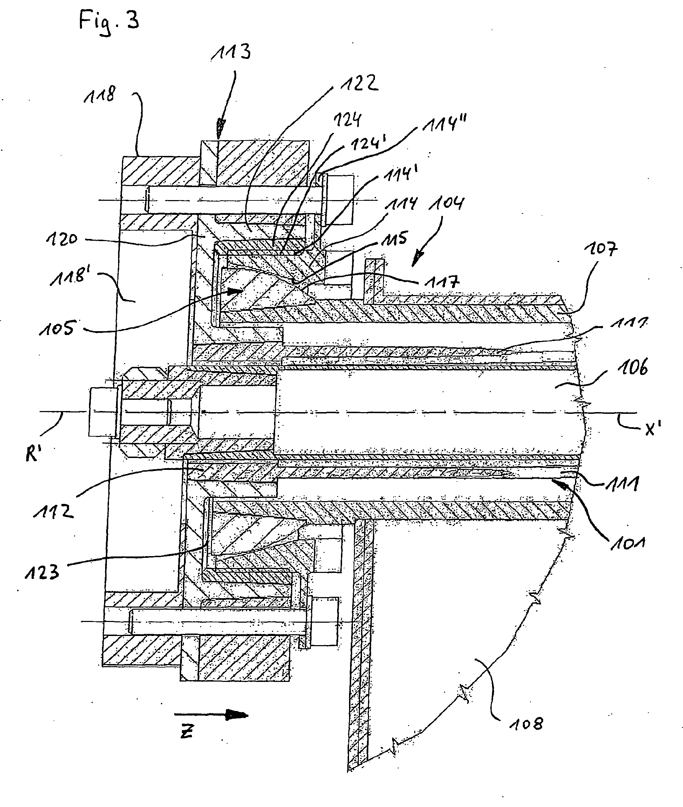

Der Aufbau und die Funktionsweise der Brems- und Dämpfungseinrichtung 113 und der Dämpfungsvorrichtung 105 werden nachfolgend anhand der Fig. 3 beschrieben.

Die Brems- und Dämpfungseinrichtung 113 weist einen ringförmigen Stützkörper 120 auf, der den ringförmigen Rohrabschnitt 112 am freien Ende des Torsionselements 101 umgibt und mit diesem drehfest und axialfest verbunden ist.

An seiner von der Lagereinrichtung 102 abgewandten freien Stirnseite ist die Bremstrommel 118 angeordnet. An der zur Lagereinrichtung 102 gewandten Seite ist der ringförmige Stützkörper 120 mit einer achsparallelen Ringrippe 122 versehen, die sich in Richtung auf die Lagereinrichtung 102 hin erstreckt. Auf der radial inneren Seite der Ringrippe 122 ist ein Gewindeabschnitt 124 mit einem Gewinde 124' ausgebildet. In das Gewinde 124' ist ein Gewinde 114' des ringförmig ausgebildeten Dämpfungsteils 114 eingeschraubt. Die Gewindeverbindung 114', 124' dient dabei zur Feineinstellung der Lage des Dämpfungsteils 114 in Richtung der Längsachse X' des Torsionselements 101. Das Dämpfungsteil 114 weist einen radialen Flansch 114" auf, der Bohrungen enthält, durch welche Sicherungs- und Befestigungsschrauben 121 hindurchgeführt sind, die den ringförmigen Stützkörper 120 radial außerhalb der Ringrippe 122 durchdringen und in die Bremstrommel 118 eingeschraubt sind. Auf diese Weise werden die Bremstrommel 118, der ringförmige Stützkörper 120 und das Dämpfungsteil 114 in Axialrichtung gegeneinander verspannt und in Radialrichtung gegen relatives Verdrehen gesichert.

Das mit der Lagerstütze 108 verbundene Mantelrohr 107 weist an seinem freien Ende die Dämpfungsvorrichtung 105 auf. Die Dämpfungsvorrichtung 105 erstreckt sich dabei in Radialrichtung nach außen über den Umfang des Mantelrohrs 107 hinaus und bildet dort eine ballig geformt Gegenreibfläche 117, die mit der radial inneren, sich kegelstumpfförmig zum ringförmigen Stützkörper 120 hin erweiternden konischen Reibfläche 115 des Dämpfungsteils 114 zusammenwirkt.

Zwischen dem Dämpfungsteil 114 und dem stirnseitigen Ende des mit der Dämpfungsvorrichtung 105 versehenen Mantelrohrs 107 ist ein Radialspalt 123 ausgebildet, dessen Breite, in Richtung der Achse X' gemessen, zumindest geringfügig größer ist als die axiale Längenänderung ΔL des Torsionselements 101 zwischen seiner entspannten Stellung und seiner gespannten Stellung..

Fig. 3 zeigt die entspannte Stellung des Torsionselements 101, bei welcher die Reibfläche 115 mit der Gegenreibfläche 117 in Reibeingriff steht. Wird das Torsionselement 101 aus der gezeigten entspannten Stellung in seine gespannte Stellung gedreht, so wandert die mit dem Torsionselement 101 fest verbundene Brems- und Dämpfungseinrichtung 113 relativ zu der von der Lagerstütze 108 dem Endabschnitt des Mantelrohrs 107 und der Dämpfungsvorrichtung 105 gebildeten Gegenlagereinrichtung 104 nach rechts in Richtung auf die Lagereinrichtung 102, wie der Pfeil Z in Fig. 3 zeigt. Bei dieser Verlagerung nach rechts geraten die Reibfläche 115 und die Gegenreibfläche 117 außer Eingriff und sie geraten umgekehrt erst wieder miteinander in Eingriff, wenn das Torsionselement 101 kurz vor dem Erreichen seiner entspannten Stellung steht, so dass die Rotationsbewegung des Torsionselements 101 und der mit ihm verbundenen Einrichtung 116 zum Übertragen von Drehmomenten positionsgenau die die Zielposition bestimmende vorgegebene Endstellung erreichen und weder diese Endstellung überschwingen, noch aus dieser Endstellung zurückschwingen.

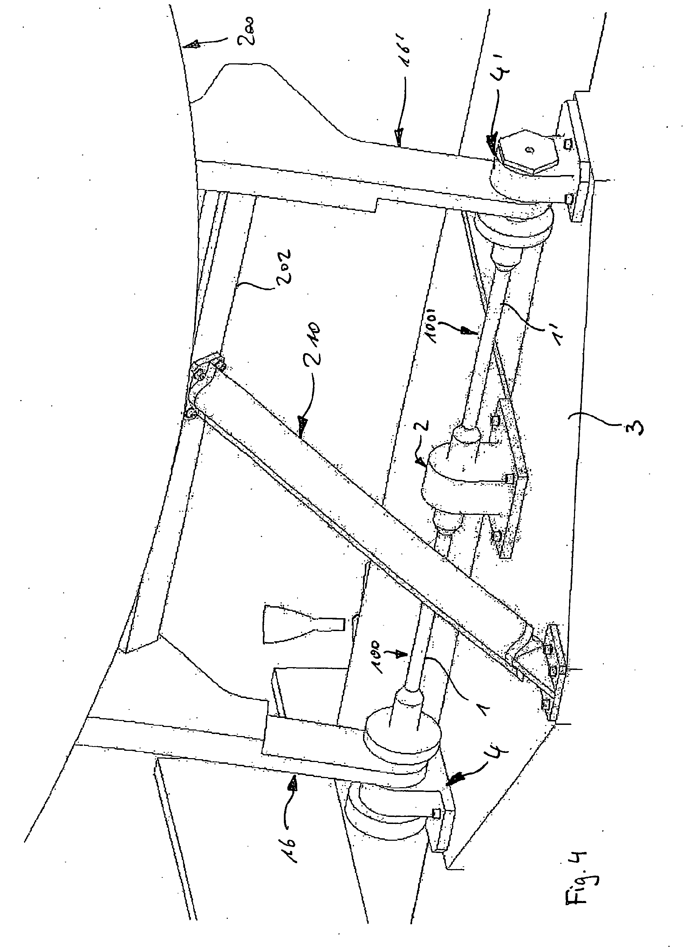

Fig. 4 zeigt die Anwendung eines erfindungsgemäßen mechanischen Rotationsantriebs zum Ausfahren einer externen Struktur an einem Satelliten. Auf der Basis 3, die an der Außenseite eines Satelliten vorgesehen ist, sind ein erster Rotationsantrieb 100 und ein zweiter Rotationsantrieb 100', die zwar spiegelbildlich an einer fest mit der Basis verbundenen Lagereinrichtung 2 angebracht, aber im wesentlichen gleich aufgebaut sind, vorgesehen.

Zwei Hebelarme dienen jeweils als Einrichtung 16, 16' zum Übertragen von Drehmoment vom jeweiligen Rotationsantrieb 100, 100' auf die Struktur einer schematisch dargestellten Satellitenantenne 200. Die Hebelarme sind dabei mit dem jeweiligen Torsionselement 1, 1' drehfest verbunden und in jeweiligen Gegenlagereinrichtungen 4, 4' schwenkbar gelagert.

Eine zusammenfaltbare Zugstrebe 210 stützt in der entfalteten Stellung der Satellitenantenne 200, das heißt, wenn sich die Torsionselemente 1, 1' in ihrer entspannten Stellung befinden, sowohl Zug- als auch Druckkräfte von der Struktur 202 der Satellitenantenne 200 auf die Basis 3 ab. Die Zugstrebe 210 besteht aus zwei im Querschnitt omegaförmigen federnden Tafeln, die an ihren Längsrändern miteinander verbunden sind. Auf diese Weise lässt sich die Zugstrebe unter Aufbringen einer verhältnismäßig großen Biegekraft zusammenfalten, wobei sich die federnden Tafeln in den Biegebereichen aneinanderlegen. In dem in Fig. 4 gezeigten gestreckten Zustand, in welchem die Zugstrebe im Querschnitt eine Doppel-Omega-Form aufweist, weist sie jedoch aufgrund der Federeigenschaften der beiden Tafeln eine hohe Biegestabilität auf, so dass sie die in diesem Anwendungsfall bei entfalteter Antenne 200 auftretenden Zug- und Druckkräfte problemlos abstützen kann.

In dem in Fig. 4 gezeigten Anwendungsbeispiel des erfindungsgemäßen mechanischen Rotationsantriebs sorgt die Entfaltkraft des Zugstrebe 210 dafür, dass die kurz vor Erreichen der Zielposition, also der Endstellung der Torsionselemente 1, 1', bereits einsetzende Brems- und Dämpfungskraft zwischen dem jeweiligen Dämpfungsteil und der jeweiligen Dämpfungsvorrichtung von der restlichen Streckkraft der Zugstrebe 210 überwunden wird, so dass zuverlässig gewährleistet ist, dass sich die Satellitenantenne 200 bis zum Erreichen der Zielposition aufrichtet.

Im Rahmen des Schutzumfangs kann die erfindungsgemäße Vorrichtung auch andere als die oben beschriebenen Ausgestaltungsformen annehmen.

Der Schutzumfang wird nur durch die nachstehend angeführten Ansprüche bestimmt.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Torsionselement
- 1': Torsionselement
- 2: Lagereinrichtung
- 3: Basis
- 4: Gegenlagereinrichtung
- 4': Gegenlagereinrichtung
- 5: Dämpfungsvorrichtung
- 10: erstes Ende
- 12: zweites, freies Ende
- 14: Dämpfungsteil
- 15: konische Reibfläche
- 16: Einrichtung zum Übertragen eines Drehmoments
- 16': Einrichtung zum Übertragen eines Drehmoments
- 17: konische Gegenreibfläche
- 100: erster Rotationsantrieb
- 100': zweiter Rotationsantrieb
- 101: Torsionselement
- 102: Lagereinrichtung
- 104: Gegenlagereinrichtung
- 105: Dämpfungsvorrichtung
- 106: zentraler Stützstab
- 107: Mantelrohr
- 108: Lagerstütze
- 110: ringförmiger Rohrabschnitt
- 111: elastischer Biegestab
- 112: ringförmiger Rohrabschnitt
- 113: Brems- und Dämpfungseinrichtung
- 114: Dämpfungsteil

- 114': Gewinde
- 114": radialer Flansch
- 115: Reibfläche
- 116: Einrichtung zum Übertragen eines Drehmoments
- 117: Gegenreibfläche
- 118: Bremstrommel
- 118': Bremsfläche
- 119: Bremsschuh
- 120: ringförmiger Stützkörper
- 121: Sicherungs- und Befestigungsschraube
- 122: Ringrippe
- 123: Radialspalt
- 124: Gewindeabschnitt
- 124': Gewinde
- 200: Satellitenantenne
- 202: Struktur
- 210: Zugstrebe

- R: Rotationsachse
- R': Drehachse
- S: Spalt
- X: Längsachse
- X': Längsachse
- Z: Pfeil

## Patentansprüche

1. Mechanischer Rotationsantrieb mit einem stabartigen Torsionselement (1; 101),
- wobei das Torsionselement (1; 101) mit einem ersten Ende (10) in einer Lagereinrichtung (2; 102) eingespannt ist,
- wobei das Torsionselement (1; 101) mit einem zweiten, freien Ende (12) gegenüber dem eingespannten Ende (10) um die eine Drehachse (R; R') bildende Längsachse (X; X') des Torsionselements (1; 101) zwischen einer entspannten Stellung und einer gespannten Stellung verdrehbar ist, wobei im Bereich des freien Endes (12) eine Einrichtung (16; 116) zum Übertragen eines Drehmoments in das Torsionselement (1; 101) oder aus dem Torsionselement (1; 101) vorgesehen ist, **dadurch gekennzeichnet, daß**
- die Länge des Torsionselements (1; 101) gegenüber der entspannten Stellung verkürzt ist, wenn das Torsionselement (1; 101) in seine gespannte Stellung gebracht ist,
- eine Dämpfungsvorrichtung (5; 105) in Axialrichtung des Torsionselements (1; 101) in einem festen Abstand zur Lagereinrichtung (2; 102) und dem freien Ende (12) des Torsionselements (1; 101) benachbart angeordnet ist, und
- im Bereich des freien Endes (12) des Torsionselements (1; 101) ein Dämpfungsteil (14; 114) am Torsionselement (1; 101) vorgesehen ist, das in der entspannten Stellung in Reibeingriff mit der Dämpfungsvorrichtung (5) steht und das in der gespannten Stellung nicht in Eingriff mit der Dämpfungsvorrichtung (5) steht.

2. Mechanischer Rotationsantrieb nach Anspruch 1,
**dadurch gekennzeichnet,**
**dass** ein zentraler Stützstab (106) für das Torsionselement (101) vorgesehen ist.

3. Mechanischer Rotationsantrieb nach Anspruch 1 oder 2,
**dadurch gekennzeichnet,**
**dass** das Torsionselement (101) ringförmig parallel zur Längsachse (X') angeordnete elastische Biegestäbe (111) aufweist, die vorzugsweise aus einem Kohlefasermaterial bestehen.

4. Mechanischer Rotationsantrieb nach Anspruch 2 oder 3,
**dadurch gekennzeichnet,**
**dass** das freie Ende des Torsionselements (101) relativ zum zentralen Stützstab (106) frei verdrehbar ist.

5. Mechanischer Rotationsantrieb nach Anspruch 3 oder 4,
**dadurch gekennzeichnet,**
**dass** das Torsionselement (101) zumindest im Bereich der ringförmig angeordneten Biegestäbe (111) von einem Mantelrohr (107) umgeben ist.

6. Mechanischer Rotationsantrieb nach Anspruch 5,
**dadurch gekennzeichnet,**
**dass** das freie Ende des Torsionselements (101) relativ zum Mantelrohr (107) frei verdrehbar ist.

7. Mechanischer Rotationsantrieb nach einem der vorhergehenden Ansprüche,
**dadurch gekennzeichnet,**
- **dass** das Dämpfungsteil (14; 114) zumindest eine Reibfläche (15; 115) aufweist, die um die Drehachse (R; R') drehbar ist, und
- **dass** die Dämpfungsvorrichtung (5; 105) zumindest eine Gegenreibfläche (17; 117) aufweist, die zumindest abschnittsweise um die Drehachse (R; R') angeordnet ist.

8. Mechanischer Rotationsantrieb nach Anspruch 7,
**dadurch gekennzeichnet,**
**dass** die Reibflächen (15; 115) und die Gegenreibflächen (17; 117) als Radialflächen bezüglich der Drehachse (R; R') ausgebildet sind.

9. Mechanischer Rotationsantrieb nach Anspruch 7,
**dadurch gekennzeichnet,**
**dass** die Reibflächen (15; 115) und die Gegenreibflächen (17; 117) als konische Flächen um die Drehachse (R; R') ausgebildet sind.

10. Mechanischer Rotationsantrieb nach Anspruch 7, 8 oder 9,
**dadurch gekennzeichnet,**
**dass** die Reibflächen (15; 115) und/oder die Gegenreibflächen (17; 117) ringförmig oder teilringförmig ausgebildet sind.

11. Verwendung eines mechanischen Rotationsantriebs gemäß einem der vorhergehenden Ansprüche als Antriebselement zum Entfalten von externen Strukturen an Raumfahrzeugen.

## Claims

1. Mechanical rotary drive having a rod-like torsion element (1; 101),
- wherein the torsion element (1; 101) is clamped in at a first end (10) in a bearing device (2; 102),
- wherein the torsion element (1; 101) can be rotated at a second, free end (12) with respect to the clamped-in end (10) about the longitudinal axis (X; X') which forms a rotation axis (R; R') of the torsion element (1; 101), between an unloaded position and a loaded position,
- wherein a device (16; 116) for transmission of a torque to the torsion element (1; 101) or from the torsion element (1; 101) is provided in the area of the free end (12),
**characterized**
- **in that** the length of the torsion element (1; 101) is shorter when the torsion element (1; 101) is in its loaded position than when it is in its unloaded position,
- **in that** a damping apparatus (5; 105) is arranged at a fixed distance from the bearing device (2; 102) and adjacent to the free end (12) of the torsion element (1; 101) in the axial direction of the torsion element (1; 101), and
- **in that** a damping part (14; 114) is provided on the torsion element (1; 101) in the area of the free end (12) of the torsion element (1; 101), engages frictionally with the damping apparatus (5) in the unloaded position, and is not engaged with the damping apparatus (5) in the loaded position.

2. Mechanical rotary drive according to Claim 1,
**characterized**
**in that** a central supporting rod (106) is provided for the torsion element (101).

3. Mechanical rotary drive according to Claim 1 or 2,
**characterized**
**in that** the torsion element (101) has elastic bending rods (111) which are arranged in the form of a ring parallel to the longitudinal axis (X') and are preferably composed of a carbon-fibre material.

4. Mechanical rotary drive according to Claim 2 or 3,
**characterized**
**in that** the free end of the torsion element (101) can rotate freely relative to the central supporting rod (106).

5. Mechanical rotary drive according to Claim 3 or 4,
**characterized**
**in that** the torsion element (101) is surrounded by a casing tube (107) at least in the area of the bending rods (111) which are arranged in the form of a ring.

6. Mechanical rotary drive according to Claim 5,
**characterized**
**in that** the free end of the torsion element (101) can rotate freely relative to the casing tube (107).

7. Mechanical rotary drive according to one of the preceding claims,
**characterized**
- **in that** the damping part (14; 114) has at least one friction surface (15; 115) which can rotate about the rotation axis (R; R') and
- **in that** the damping apparatus (5; 105) has at least one opposing friction surface (17; 117) which is arranged at least in places around the rotation axis (R; R').

8. Mechanical rotary drive according to Claim 7,
**characterized**
**in that** the friction surfaces (15; 115) and the opposing friction surfaces (17; 117) are in the form of radial surfaces with respect to the rotation axis (R; R').

9. Mechanical rotary drive according to Claim 7,
**characterized**
**in that** the friction surfaces (15; 115) and the opposing friction surfaces (17; 117) are in the form of conical surfaces around the rotation axis (R; R').

10. Mechanical rotary drive according to Claim 7, 8 or 9,
**characterized**
**in that** the friction surfaces (15; 115) and/or the opposing friction surfaces (17; 117) are in the form of a ring or part of a ring.

11. Use of a mechanical rotary drive according to one of the preceding claims as a drive element for unfolding external structures on spacecraft.

## Revendications

1. Entraînement en rotation mécanique comprenant un élément de torsion de type barre (1 ; 101),
- l'élément de torsion (1 ; 101) étant serré avec une première extrémité (10) dans un dispositif de palier (2 ; 102),
- l'élément de torsion (1 ; 101) pouvant tourner avec une deuxième extrémité (12) par rapport à la première extrémité (10) autour de l'axe longitudinal (X ; X') de l'élément de torsion (1 ; 101) formant un axe de rotation (R, R') entre une position desserrée et une position serrée,
- un dispositif (16 ; 116) pour transférer un couple dans l'élément de torsion (1 ; 101) ou depuis l'élément de torsion (1 ; 101) étant prévu dans la région de l'extrémité libre (12),
**caractérisé en ce que**
- la longueur de l'élément de torsion (1 ; 101) est raccourcie par rapport à la position desserrée, lorsque l'élément de torsion (1 ; 101) est amené dans sa position serrée,
- un dispositif d'amortissement (5 ; 105) est disposé dans la direction axiale de l'élément de torsion (1 ; 101) à une distance fixe du dispositif de palier (2 ; 102) et à côté de l'extrémité libre (12) de l'élément de torsion (1 ; 101), et
- dans la région de l'extrémité libre (12) de l'élément de torsion (1 ; 101), on prévoit une partie d'amortissement (14, 114) sur l'élément de torsion (1 ; 101), laquelle est en engagement par friction avec le dispositif d'amortissement (5) dans la position desserrée, et n'est pas en prise avec le dispositif d'amortissement (5) dans la position serrée.

2. Entraînement en rotation mécanique selon la revendication 1,
**caractérisé en ce**
**qu'**une barre de support centrale (106) est prévue pour l'élément de torsion (101).

3. Entraînement en rotation mécanique selon la revendication 1 ou 2,
**caractérisé en ce que**
l'élément de torsion (101) présente des barres de flexion (111) élastiques disposées sous forme annulaire parallèlement à l'axe longitudinal (X'), lesquelles sont constituées d'un matériau en fibres de carbone.

4. Entraînement en rotation mécanique selon la revendication 2 ou 3,
**caractérisé en ce que**
l'extrémité libre de l'élément de torsion (101) peut tourner librement par rapport à la barre de support centrale (106).

5. Entraînement en rotation mécanique selon la revendication 3 ou 4,
**caractérisé en ce que**
l'élément de torsion (101) est entouré par un tube d'enveloppe (107) au moins dans la région des barres de flexion (111) disposées sous forme annulaire.

6. Entraînement en rotation mécanique selon la revendication 5,
**caractérisé en ce que**
l'extrémité libre de l'élément de torsion (101) peut tourner librement par rapport au tube d'enveloppe (107).

7. Entraînement en rotation mécanique selon l'une quelconque des revendications précédentes,
**caractérisé en ce que**
- la partie d'amortissement (14 ; 114) présente au moins une surface de friction (15 ; 115) qui peut tourner autour de l'axe de rotation (R ; R'), et
- **en ce que** le dispositif d'amortissement (5 ; 105) présente au moins une surface de friction conjuguée (17 ; 117) qui est disposée au moins en partie autour de l'axe de rotation (R ; R').

8. Entraînement en rotation mécanique selon la revendication 7,
**caractérisé en ce que**
les surfaces de friction (15 ; 115) et les surfaces de friction conjuguées (17 ; 117) sont réalisées sous forme de surfaces radiales par rapport à l'axe de rotation (R ; R').

9. Entraînement en rotation mécanique selon la revendication 7,
**caractérisé en ce que**
les surfaces de friction (15 ; 115) et les surfaces de friction conjuguées (17 ; 117) sont réalisées sous forme de surfaces coniques autour de l'axe de rotation (R ; R').

10. Entraînement en rotation mécanique selon la revendication 7, 8 ou 9,
**caractérisé en ce que**
les surfaces de friction (15 ; 115) et/ou les surfaces de friction conjuguées (17 ; 117) sont réalisées sous forme annulaire ou partiellement annulaire.

11. Utilisation d'un entraînement en rotation mécanique selon l'une quelconque des revendications précédentes en tant qu'élément d'entraînement pour déployer des structures externes de vaisseaux spatiaux.
